# EUROPÄISCHE PATENTSCHRIFT

(11) **EP 2 306 217 B1**
(45) Veröffentlichungstag und Bekanntmachung des Hinweises auf die Patenterteilung: **19.04.2017**
(21) Anmeldenummer: 09012401.7
(22) Anmeldetag: 30.09.2009
(51) Int. Cl.: G01S 7/497, G01S 17/93, G01S 17/42

(54) **Umgebungserfassung**
Environment recording
Détermination d'un environnement

(43) Veröffentlichungstag der Anmeldung: 06.04.2011
(73) Patentinhaber: SICK AG, 79183 Waldkirch (DE)
(72) Erfinder: Köhler, Michael, 22529 Hamburg (DE); Lages, Ulrich Dr., 22149 Hamburg (DE)
(74) Vertreter: Manitz, Finsterwald & Partner GbR

(56) Entgegenhaltungen:
- EP-A1- 1 557 691
- EP-A2- 1 286 178
- DE-A1- 19 536 000
- US-A- 6 157 294
- US-A1- 2003 168 581
- EWALD A ET AL: "Laser scanners for obstacle detection in automotive applications" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US LNKD- DOI:10.1109/IVS.2000.898427, 3. Oktober 2000 (2000-10-03), Seiten 682-687, XP010529017 ISBN: 978-0-7803-6363-2

## Beschreibung

Die Erfindung betrifft ein Verfahren zum ortsaufgelösten Erfassen der Umgebung mittels eines Laserscanners, der an einem sich relativ zu seiner Umgebung am Boden bewegenden Träger, insbesondere an einem Fahrzeug, angebracht ist und dabei die Umgebung in wenigstens zwei geneigt zueinander verlaufenden Ebenen abtastet sowie eine vorgegebene Arbeitsapplikation durchführt.

Derartige Verfahren sind grundsätzlich bekannt. Außerdem wird zum allgemeinen Stand der Technik auch auf EP 1 239 301 A1 verwiesen.

Laserscanner der hier in Rede stehenden Art senden gepulste oder kontinuierliche Laserstrahlung beispielsweise im Infrarotbereich aus. Aus der Umgebung zurückgeworfene Strahlung wird von einer Empfangseinrichtung des Laserscanners detektiert. Aus der Laufzeit der Strahlung kann die Entfernung zwischen dem Laserscanner und einem Gegenstand, an welchem die Strahlung aus der Umgebung zurückgeworfen wurde, berechnet werden. Es sind auch so genannte Phasenmessverfahren bekannt, die ebenfalls eine Entfernungsberechnung ermöglichen. Aufgrund der generellen Bekanntheit dieser Methoden zur Entfernungsbestimmung mittels Laserscannern braucht hierauf nicht näher eingegangen zu werden.

Bekannte Laserscanner senden die Strahlung in einer oder mehreren Ebenen aus. Dabei wird - jeweils innerhalb der betreffenden Ebene - die Strahlung zeitlich nacheinander in unterschiedliche Richtungen ausgesandt, so dass im Ergebnis für jede Ebene die Umgebung in einer beispielsweise, aber nicht zwingend, horizontal verlaufenden Linie abgetastet wird, wobei die einzelnen Messpunkte entsprechend der Winkelauflösung des Laserscanners längs dieser Linie beabstandet sind. Das Aussenden der Strahlung in unterschiedlichen Richtungen wird beispielsweise mittels eines Drehspiegels erzielt, der einen in einer Sendeeinrichtung des Laserscanners erzeugten Laserstrahl nacheinander in die verschiedenen Winkelrichtungen ablenkt. Für jeden Messpunkt innerhalb einer Ebene ist somit zum einen die Entfernung, aus welcher die ausgesandte Strahlung zurückgeworfen wird, und zum anderen die Winkelrichtung, aus welcher die zurückgeworfene Strahlung in Bezug auf ein dem Laserscanner zugeordnetes Koordinatensystem stammt, bekannt. Auf diese Weise wird mit jeder Abtastebene ein ortsaufgelöstes (linienförmiges) Bild der Umgebung erzeugt, das aus einer Vielzahl von Messpunkten besteht. Ein mit mehreren geneigt zueinander verlaufenden Abtastebenen arbeitender Laserscanner kann somit ein dreidimensionales bzw. quasi-dreidimensionales ortsaufgelöstes Bild der Umgebung erzeugen, das im Unterschied zu dem Bild einer Videokamera zusätzlich Tiefen- oder Abstandsinformationen zu den einzelnen Bildpunkten enthält.

In Verbindung mit derartigen Laserscannern ist zwischen deren Reichweite einerseits und deren Sichtweite, die auch als meteorologische Sichtweite bezeichnet wird, andererseits zu unterscheiden. Die Reichweite eines Laserscanners ist gewissermaßen ein fester Geräteparameter, der unter anderem durch die Sendeleistung, also die Intensität der ausgesandten Laserstrahlung, bestimmt ist. Die Sichtweite des Laserscanners hingegen ist diejenige Entfernung, in welcher sich Gegenstände maximal befinden dürfen, damit der Laserscanner bestimmungsgemäß arbeiten, d.h. eine vorgegebene Aufgabe erfüllen, kann. Beispielsweise muss die Intensität der zurückgeworfenen Strahlung für eine bestimmte Anwendung ein bestimmtes Mindestniveau aufweisen, damit die Empfangseinrichtung auswertbare Signale liefern kann.

Der bestimmungsgemäße Betrieb eines Laserscanners kann aufgrund unterschiedlicher Ursachen gestört sein. So kann beispielsweise eine Sendeeinrichtung oder eine Empfangseinrichtung ausfallen. Des Weiteren kann z.B. die Sendeleistung der Sendeeinrichtung abnehmen, ohne dass es dabei zu einem Totalausfall kommt. Ferner können so genannte atmosphärische Störungen auftreten, worunter im Rahmen der Erfindung beispielsweise Staub, Regen oder Nebel fallen, d.h. solche Phänomene, die zu einer Schwächung der sich ausbreitenden Laserstrahlung führen können, wobei in Abhängigkeit von der Stärke der jeweiligen atmosphärischen Störung das empfangene Signal entweder nur geschwächt wird oder gänzlich ausbleibt, d.h. unter einer minimalen Nachweisschwelle der Empfangseinrichtung bleibt.

Grundsätzlich ist man bestrebt, derartige Störungen während des Betriebs des Laserscanners nicht nur als solche zu erkennen, sondern auch voneinander zu unterscheiden, um entsprechend reagieren zu können. Dies ist dann besonders wichtig, wenn der Laserscanner ausschließlich oder zusätzlich sicherheitsrelevante Aufgaben zu erfüllen hat, beispielsweise vor Kollisionen eines Fahrzeugs, an welchem der Laserscanner angebracht ist, mit anderen Gegenständen vermeiden bzw. rechtzeitig vor drohenden Kollisionen warnen soll. Nimmt beispielsweise aufgrund einer atmosphärischen Störung die maximale Intensität der Strahlung, die überhaupt noch auf die Empfangseinrichtung gelangen kann, ab, so kann es genügen, entweder die Sendeleistung der Sendeeinrichtung zu erhöhen oder die Geschwindigkeit eines den Laserscanner tragenden Fahrzeugs zu verringern. Bei einem Totalausfall dagegen kann es erforderlich sein, den Fahrzeugbetrieb völlig einzustellen.

Es sind Laserscanner bekannt, die eine gewissermaßen "eingebaute" Testfunktion aufweisen und hierzu mit internen Referenzzielen arbeiten. Hierfür wird beispielsweise ein für den Umgebungserfassungsbetrieb nicht benötigter Abtastwinkelbereich genutzt. Mit derartigen Testfunktionen kann beispielsweise der Totalausfall einer Sendeeinrichtung oder einer Empfangseinrichtung eindeutig festgestellt werden. Derartige eingebaute Testfunktionen erhöhen jedoch die Kosten des Laserscanners, so dass es Anwendungen und Einsatzbereiche gibt, in denen derartige interne Referenzen nicht zur Verfügung stehen.

Ferner ist es bekannt, bei statischen Anwendungen, also in Anwendungen, in denen sich der Laserscanner selbst relativ zu seiner Umgebung nicht bewegt, mit festen Referenzzielen zu arbeiten, die in bekannten Entfernungen zum Laserscanner installiert sind und beispielsweise eine bekannte Reflektivität aufweisen. Insbesondere in Kombination mit der Verwendung interner Testfunktionen bzw. interner Referenzziele kann mit derartigen externen Referenzzielen erkannt werden, ob beispielsweise eine atmosphärische Störung vorliegt und welchen Grad einer Sichtweitenreduzierung diese atmosphärische Störung zur Folge hat.

Bei so genannten mobilen Anwendungen, also bei Anwendungen, an denen der Laserscanner an einem sich bewegenden Träger, beispielsweise einem Fahrzeug, angebracht ist, ist problematisch, dass mit derartigen externen Referenzzielen nicht gearbeitet werden kann. Wenn beispielsweise ein an einem Mähdrescher angebrachter Laserscanner dazu dient, die Mähkante zu detektieren, also die Grenze zwischen bereits gemähtem und noch nicht gemähtem Feld, dann ist es aus Praktikabilitäts- und Kostengründen ersichtlich nicht möglich, dem Mähdrescher ein Fahrzeug in gleich bleibender Entfernung vorausfahren zu lassen, um auf diese Weise ein festes Referenzziel bereitzustellen. Wenn außerdem, was für die Praxis relevant ist, aus wirtschaftlichen Gründen nur kostengünstige Laserscanner zum Einsatz kommen können, die keine interne Testfunktion aufweisen und beispielsweise nicht mit internen Referenzzielen arbeiten können, dann liegt auf der Hand, dass derartige Laserscanner insofern anfällig für Störungen jedweder Art sind, als diese Störungen entweder nicht als solche erkannt oder nicht voneinander unterschieden werden können. Kritisch ist dies ersichtlich in Situationen, in denen atmosphärische Störungen wie beispielsweise Staubentwicklung zu erwarten sind und außerdem der Laserscanner sicherheitsrelevante Aufgaben zu erfüllen, beispielsweise vor drohenden Kollisionen zu warnen hat.

Aus der US 6,157,294 A ist es bekannt, mittels zweier Laser-Radar-Vorrichtungen eine Straßenoberfläche aus verschiedenen Winkeln zu erfassen, wodurch beispielsweise eine Nickbewegung eines Fahrzeugs erkannt werden kann. Aufgrund der Erkennung von Fahrzeugbewegungen ist es möglich, die Ausrichtung einer weiteren Laser-Radar-Vorrichtung zu überprüfen.

Die DE 195 36 000 A1 beschreibt einen Abstandssensor mit mehreren Sende-Empfangskanälen. Ein Teil der Sende-Empfangskanäle kann auf eine Fahrbahn gerichtet sein, wodurch die Ausrichtung des Fahrzeugs oder Ausrichtungsänderungen, z.B. durch Beladung, erkannt werden können.

Aufgabe der Erfindung ist es, eine Möglichkeit zu schaffen, den Einsatzbereich für Laserscanner in mobilen Anwendungen zu vergrößern.

Die Lösung dieser Aufgabe erfolgt durch die Merkmale des Anspruchs 1.

Bei dem erfindungsgemäßen Verfahren der eingangs genannten Art ist der Laserscanner derart an dem Träger, beispielsweise an einem Fahrzeug, angebracht, dass wenigstens zwei geneigt zueinander verlaufende Abtastebenen des Laserscanners auf den Boden gerichtet sind und die Abtastebenen jeweils ein als solches erkennbares Bodensignal erzeugen, wobei von dem Laserscanner gleichzeitig mit der Arbeitsapplikation eine zusätzliche Funktionsüberprüfung des Laserscanners durchgeführt wird, bei welcher der Boden als Referenz verwendet wird, indem wiederholt geprüft wird, ob die von den geneigt zueinander verlaufenden Abtastebenen erzeugten Bodensignale eine für einen ungestörten Zustand des Laserscanners erwartete Bedingung erfüllen, und eine Maßnahme eingeleitet wird, wenn dies nicht der Fall ist.

Die Erfindung beruht somit auf dem Gedanken, sich bei einer mobilen Anwendung eine feste Referenz dadurch zu schaffen, dass mit wenigstens zwei geneigt zueinander verlaufenden Abtastebenen des Laserscanners gearbeitet wird, die auf den Boden gerichtet sind, wodurch mit jeder Abtastebene ein Bodensignal erzeugt wird, das durch die Auswertung der empfangenen Strahlung als solches erkannt werden kann, d.h. erfindungsgemäß wird der Boden als Referenz verwendet. Es wird also durch die Erfindung der Umstand ausgenutzt, dass bei einem sich am Boden bewegenden Träger des Laserscanners der Boden nicht nur permanent zur Verfügung steht, sondern die relative Anordnung zwischen dem Laserscanner und dem Ziel "Boden" immer gleich bleibt. An dieser Stelle ist festzuhalten, dass in Verbindung mit Laserscannern Methoden zur Bodenerkennung grundsätzlich bekannt sind, die gewährleisten, dass die Bodensignale auch dann als solche erkannt werden, wenn der Träger des Laserscanners während seiner Bewegung am Boden charakteristische Bewegungen wie beispielsweise Nickbewegungen ausführt. Wenn die mittels der Abtastebenen erzeugten Bodensignale eine erwartete Bedingung erfüllen, die bei der Auswertung der empfangenen Strahlung wiederholt geprüft werden kann, dann ist sichergestellt, dass ein ungestörter Zustand vorliegt.

Die vorgegebene Arbeitsapplikation, die der Laserscanner während der Bewegung des Trägers am Boden ausführt, muss nicht, kann aber, mit denjenigen Abtastebenen des Laserscanners durchgeführt werden, die zur Erzeugung der für die Funktionsüberprüfung des Laserscanners herangezogenen Bodensignale verwendet werden. Die auf den Boden gerichteten Abtastebenen können aber sowohl zur Durchführung der Arbeitsapplikation als auch zur Durchführung der Funktionsüberprüfung dienen. Ob eine wie auch immer geartete Aufteilung der insgesamt zur Verfügung stehenden Abtastebenen auf die einzelnen Aufgaben bzw. Applikationen des Laserscanners vorgesehen wird, hängt letztlich von der jeweiligen Anwendung ab.

Die Verwendung von wenigstens zwei auf den Boden gerichteten Abtastebenen zur Funktionsüberprüfung ermöglicht - allgemein ausgedrückt - unter anderem die Anwendung von Kombinationsmethoden bei der Prüfung, ob die einem ungestörten Zustand entsprechende erwartete Bedingung erfüllt ist. Hierauf wird nachstehend näher eingegangen.

Damit ermöglicht es die Erfindung, parallel zu einer Arbeitsapplikation eine Funktionsüberprüfung des Laserscanners durchzuführen, um Störungen zu erkennen und gegebenenfalls - je nach konkreter Ausgestaltung des Laserscanners und der Art und Weise der Auswertung der empfangenen Strahlung - unterschiedliche Störungen voneinander zu unterscheiden, um im Falle eines Auftretens einer Störung eine geeignete Maßnahme einzuleiten.

Wie vorstehend bereits erwähnt, kann die Maßnahme, die eingeleitet wird, wenn die für einen ungestörten Zustand erwartete Bedingung nicht erfüllt wird, darin bestehen, beispielsweise die Sendeleistung der Sendeeinrichtung zu erhöhen, um trotz einer atmosphärischen Störung die eigentliche Arbeitsapplikation des Laserscanners weiterhin durchführen zu können. In einer möglichen Ausführungsform der Erfindung wird gleichzeitig mit der Arbeitsapplikation und der Funktionsüberprüfung eine zusätzliche Sicherheitsapplikation mittels des Laserscanners durchgeführt. Bei dieser Sicherheitsapplikation kann es sich beispielsweise um eine Kollisionswarnung handeln. Dabei wird z.B. mittels des Laserscanners laufend geprüft, ob mit dem Laserscanner detektierte Gegenstände einen vorgegebenen Mindestabstand zum Laserscanner unterschreiten. Dieser Mindestabstand kann adaptiv sein und beispielsweise von der Geschwindigkeit eines den Laserscanner tragenden Fahrzeugs abhängen. Wenn mittels der Funktionsüberprüfung beispielsweise festgestellt wird, dass eine die Sichtweite beeinträchtigende atmosphärische Störung vorliegt, dann kann es sich bei der einzuleitenden Maßnahme um eine Sicherheitsmaßnahme handeln, die darin besteht, dass der Fahrer des Fahrzeugs gewarnt oder automatisch die Fahrzeuggeschwindigkeit auf ein Maximum begrenzt wird, um auf diese Weise die Gefahr von Kollisionen mit Gegenständen, die möglicherweise aufgrund der Sichtweiteneinschränkung mittels des Laserscanners erst später als in einem ungestörten Zustand erkannt werden können, zu vermeiden.

Wie vorstehend in Bezug auf die Arbeitsapplikation und die Funktionsüberprüfung erwähnt, ist es möglich, aber nicht zwingend, dass die Sicherheitsapplikation mit denjenigen Abtastebenen durchgeführt wird, mit denen auch die Arbeitsapplikation und/oder die Funktionsüberprüfung durchgeführt werden. So können beispielsweise für die Sicherheitsapplikation auch eine oder mehrere eigene Abtastebenen vorgesehen sein, die weder zur eigentlichen Arbeitsapplikation noch zur Funktionsüberprüfung des Laserscanners beitragen.

Bei der erfindungsgemäßen Funktionsüberprüfung und insbesondere bei der Prüfung, ob die Bodensignale die erwartete Bedingung erfüllen, können gemäß der Erfindung eine Vielzahl von Szenarien berücksichtigt werden, die im Betrieb eines sich bewegenden, den Laserscanner tragenden Trägers auftreten können. Durch die Abprüfung vorgegebener möglicher Szenarien kann auf das Vorliegen bestimmter Störungen geschlossen oder können bestimmte Störungen ausgeschlossen werden. Die abzuprüfenden Szenarien können in Abhängigkeit von der jeweiligen Umgebung bzw. Anwendung ausgewählt werden.

Wie eingangs bereits erwähnt, hat die Verwendung von wenigstens zwei geneigt zueinander verlaufenden, auf den Boden gerichteten Abtastebenen ("Bodenebene"), wie es die Erfindung vorsieht, den wesentlichen Vorteil, dass gegenüber der Verwendung lediglich einer einzigen "Bodenebene" die Vielseitigkeit der Funktionsüberprüfung beträchtlich erhöht wird. Nur als Beispiel sei erwähnt, dass z.B. dann, wenn die von den Abtastebenen erzeugten Bodensignale bei einer Vorwärtsbewegung eines den Laserscanner tragenden Fahrzeugs zeitlich nacheinander nicht mehr nachweisbar sind, d.h. zu einem ersten Zeitpunkt noch beide Bodensignale detektiert werden, zu einem späteren Zeitpunkt nur noch ein einziges, näher am Laserscanner gelegenes Bodensignal erkannt wird und zu einem noch späteren Zeitpunkt kein Bodensignal mehr vorhanden ist, bei einer Detektion eines derartigen "Bodenmusters" darauf geschlossen werden kann, dass sich das Fahrzeug einem Bereich nähert, in dem der Boden als solcher nicht mehr vorhanden ist. Eine derartige Überprüfung ist beispielsweise sinnvoll in Anwendungen an Fahrzeugen in Hafenbereichen. Das oben erwähnte Bodenmuster kann dann eindeutig als ein Heranfahren eines Fahrzeugs an ein Hafenbecken interpretiert werden.

Allgemein ausgedrückt ist somit gemäß einem bevorzugten Ausführungsbeispiel der Erfindung vorgesehen, dass bei der Funktionsüberprüfung das zeitliche Verhalten der von den geneigt zueinander verlaufenden, auf den Boden gerichteten Abtastebenen erzeugten Bodensignalen berücksichtigt wird.

Gemäß einer weiteren Ausführungsform der Erfindung, die alternativ oder zusätzlich zu der vorstehend erläuterten Berücksichtigung des zeitlichen Verhaltens vorgesehen sein kann, wird bei der Funktionsüberprüfung die Zuordnung der geneigt zueinander verlaufenden, auf den Boden gerichteten Abtastebenen zu wenigstens einer Sendeeinrichtung und zu zumindest einer Empfangseinrichtung des Laserscanners berücksichtigt. Auch für diese Ausgestaltung der Erfindung kann sich das Arbeiten mit wenigstens zwei geneigt zueinander verlaufenden Ebenen, die auf den Boden gerichtet sind, als besonders vorteilhaft erweisen.

So sind beispielsweise Laserscanner bekannt, bei denen einem Sender zwei oder mehrere unabhängig voneinander auswertbare Empfänger zugeordnet sind, und zwar derart, dass von dem Sender ausgestrahlte und aus der Umgebung zurückgeworfene Strahlung gleichzeitig die mehreren Empfänger beaufschlagt, was daran liegt, dass die ausgesandte Strahlung nicht punktförmig, sondern aufgrund einer unvermeidbaren oder gezielt eingerichteten Strahlaufweitung flächig, also gewissermaßen als "Lichtfleck", von in der Umgebung befindlichen Gegenständen zurückgeworfen wird. Der Sender und die Empfänger sind dann zumindest für einen vorgegebenen Sichtweitenbereich derart relativ zueinander angeordnet und ausgerichtet, dass dieser "Lichtfleck" auf den mehreren Empfängern abgebildet wird. Anders ausgedrückt "blickt" somit jeder Empfänger auf einen eigenen, mittels des Senders "beleuchtbaren" Bereich der Umgebung. Ein Arbeiten mit zwei Abtastebenen kann in diesem Beispiel also durch entsprechende Anordnung von zwei Empfängern realisiert werden, die mittels eines einzigen Senders beaufschlagt werden.

An dieser Stelle ist noch zu bemerken, dass im Rahmen der Erfindung die Begriffe "Sendeeinrichtung" und "Empfangseinrichtung" ganz allgemein zu verstehen sind. Je nach konkreter Ausgestaltung des Laserscanners und Sinnzusammenhang kann der Begriff "Sendeeinrichtung" lediglich die Laserquelle bezeichnen, beispielsweise eine Laserdiode, wobei unter diesem Begriff aber auch eine Anordnung aus Lichtquelle plus zugehöriger Optik zu verstehen sein kann. Des Weiteren kann der Begriff "Sendeeinrichtung" die Gesamtheit aller einzelnen Laserquellen, gegebenenfalls samt jeweils zugeordneter oder insgesamt sendeseitig vorgesehener Optik, umfassen. Das Gleiche gilt für den Begriff der "Empfangseinrichtung". Der Nachweis der aus der Umgebung zurückgeworfenen Laserstrahlung erfolgt beispielsweise durch Dioden, z.B. vom APD-Typ, wobei im Falle mehrerer Dioden die Gesamtheit einer solchen Anordnung auch als Empfangs-Diodenarray bezeichnet wird. Dabei stellt eine Diode gewissermaßen die kleinste unabhängig auswertbare Einheit der gesamten Empfangseinrichtung dar. Derartigen Empfangsdioden können ebenfalls jeweils Einzeloptiken und/oder eine gemeinsame Empfangsoptik zugeordnet sein. Die Gesamtheit aller empfangsseitig vorgesehenen Einrichtungen kann ebenfalls von dem Begriff "Empfangseinrichtung" umfasst sein.

Im Folgenden wird der Einfachheit halber auch nur von "Sender" und "Empfänger" gesprochen, wobei dann - sofern nichts anderes erwähnt ist - mit "Sender" eine Laserquelle samt Sendeoptik und mit "Empfänger" eine unabhängig auswertbare Empfangsdiode samt Empfangsoptik gemeint ist.

Demgemäß ist in einer weiteren bevorzugten Ausgestaltung der Erfindung vorgesehen, dass wenigstens zwei geneigt zueinander verlaufenden, auf den Boden gerichteten Abtastebenen eine gemeinsame Sendeeinrichtung und jeweils eine eigene Empfangseinrichtung des Laserscanners zugeordnet sind, wobei von der Sendeeinrichtung ausgesandte und aus der Umgebung zurückgeworfene Abtaststrahlung von den Empfangseinrichtungen in der jeweils zugeordneten Abtastebene nachgewiesen wird. Hier ist der Begriff der "Abtastebenen" also empfangsseitig zu verstehen, denn die Aussendung der Strahlung durch die gemeinsame Sendeeinrichtung erfolgt in einer einzigen Ebene, wobei es aber die beiden gleichzeitig beaufschlagbaren Empfangseinrichtungen sind, die in diesem Beispiel eine Abtastung der Umgebung in zwei geneigt zueinander verlaufenden Ebenen realisieren.

Was die erwähnten Kombinationsmöglichkeiten zur Abprüfung verschiedener Störungsszenarien anbetrifft, so ist eine solche Ausgestaltung des Laserscanners von Vorteil, da bestimmten nachweisbaren Situationen eindeutige Störungen zugeordnet werden können. Wenn beispielsweise zwei einem Sender zugeordnete Empfänger keine Signale mehr liefern, d.h. kein einziges Bodensignal detektiert wird und dieser Zustand sich zeitlich auch nicht ändert, dann kann mit einer sehr hohen Wahrscheinlichkeit darauf geschlossen werden, dass der Sender beschädigt ist, da ein gleichzeitiger Ausfall beider Empfänger sehr unwahrscheinlich ist.

Wenn dagegen lediglich ein Empfänger dauerhaft kein Bodensignal mehr liefert, dann liegt mit hoher Wahrscheinlichkeit eine Beschädigung eben dieses Empfängers vor, da das weiterhin existente Bodensignal des anderen Empfängers bedeutet, dass nicht nur dieser Empfänger, sondern auch der Sender weiterhin funktionsfähig ist.

Die Kombinationsmöglichkeiten bzw. die Vielseitigkeit des Laserscanners aufgrund der Möglichkeit, verschiedenartige Szenarien überhaupt oder mit höherer Aussagekraft abprüfen zu können, wird weiter erhöht, wenn gemäß einer weiteren bevorzugten Ausgestaltung der Erfindung der Laserscanner mit vier geneigt zueinander verlaufenden, auf den Boden gerichteten Abtastebenen arbeitet, denen paarweise eine gemeinsame Sendeeinrichtung und jeweils eine eigene Empfangseinrichtung zugeordnet sind.

Was die bereits mehrfach erwähnten atmosphärischen Störungen anbetrifft, so kann in die Funktionsüberprüfung das Wissen über charakteristische Eigenschaften von atmosphärischen Störungen aus Sicht eines mit mehreren Abtastebenen arbeitenden Laserscanners einfließen. So kann beispielsweise Nebel oder Regen dadurch erkannt werden, dass zum einen jede Abtastebene in einem Nahbereich Messergebnisse liefert und zum anderen ein aus einer größeren Entfernung stammendes Signal (so genanntes "zweites Echo") vorhanden ist, das von einem Gegenstand oder vom Boden stammt, was daran liegt, dass atmosphärische Störungen wie beispielsweise Nebel oder Regen einerseits die ausgesandte Strahlung bereits im Nahbereich reflektieren ("erstes Echo"), andererseits die ausgesandte Strahlung in Abhängigkeit von ihrer Intensität dazu in der Lage ist, den Nebel bzw. Regen zu durchdringen und somit von einem Gegenstand zurückgeworfen zu werden ("zweites Echo"). Für die aufgrund einer atmosphärischen Störung im Nahbereich hervorgerufenen Signale ist außerdem charakteristisch, dass diese Nahbereichsmessungen keine "scharfen" Entfernungswerte liefern, d.h. die im Laufe der Zeit im Nahbereich aufgrund einer atmosphärischen Störung gemessenen Entfernungen zeichnen sich durch eine charakteristische Stochastik aus. Ferner sind zumindest einige atmosphärische Störungen wie Nebel und Regen dann, wenn sie vorhanden sind, grundsätzlich nicht lokal, sondern global im Erfassungsbereich des Laserscanners vorhanden, d.h. die charakteristischen Signale treten nicht in einem begrenzten Abtastwinkelbereich, sondern im gesamten Abtastwinkelbereich auf. Des Weiteren treten solche atmosphärischen Störungen nicht schlagartig mit voller Intensität auf, sondern es kommt zu mehr oder weniger schnell ansteigenden Intensitäten. Dies spiegelt sich in einem nachweisbaren zeitlichen Verhalten der Signalhöhen der empfangenen Strahlung wider.

Diese Phänomene können herangezogen werden, um atmosphärische Störungen mittels des Laserscanners als solche zu erkennen.

Eine weitere Möglichkeit zur Erhöhung der Vielseitigkeit der Funktionsüberprüfung, die gemäß einer bevorzugten Ausgestaltung der Erfindung vorgesehen werden kann, besteht darin, in den geneigt zueinander verlaufenden, auf den Boden gerichteten Abtastebenen die Nachweisempfindlichkeit unterschiedlich einzustellen. In den einzelnen Abtastebenen wird hierbei folglich mit unterschiedlichen Empfindlichkeiten gearbeitet. Die Umgebung wird hierbei also nicht nur in unterschiedlichen Richtungen abgetastet, die durch die Orientierungen der Abtastebenen vorgegeben sind, sondern die Abtastung der Umgebung erfolgt außerdem mit unterschiedlichen Empfindlichkeiten. Da hierbei sowohl Richtung als auch Empfindlichkeit einer jeden Abtastebene bekannt sind, können aufgrund der nachgewiesenen Signale selbst und/oder deren zeitlichen Verhaltens noch besser und genauer Rückschlüsse auf die Situation in der Umgebung des Laserscanners gezogen werden. So kann beispielsweise für die Funktionsüberprüfung die Tatsache ausgenutzt werden, dass - wie bereits erwähnt - atmosphärische Störungen wie beispielsweise Nebel und Regen typischerweise nicht schlagartig in voller Stärke auftreten, sondern sich Nebel und Regen aus Sicht des Laserscanners erst nach und nach bemerkbar machen. Eine heranziehende Nebelbank oder einsetzender Regen wird sich folglich anfangs nur in derjenigen Abtastebene bemerkbar machen, welche die höchste eingestellte Nachweisempfindlichkeit aufweist. Bei dieser Abtastebene handelt es sich bevorzugt um diejenige Abtastebene, die in der größten Entfernung auf den Boden "blickt", also gewissermaßen um die am weitesten "vorausschauende" Abtastebene.

Darüber hinaus kann der Laserscanner erfindungsgemäß mit so genannten Schwellenschaltern für die Nachweisempfindlichkeit in den einzelnen Ebenen versehen sein, womit es möglich ist, die Nachweisempfindlichkeit in den einzelnen Abtastebenen zeitlich zu variieren. Somit ergibt sich aufgrund der Neigung der Abtastebenen untereinander nicht nur eine Winkelabhängigkeit der Nachweisempfindlichkeit überhaupt, sondern diese Winkelabhängigkeit kann durch gezieltes Verändern der einzelnen Nachweisempfindlichkeiten überdies variiert werden. Die nachgewiesenen Signale können folglich mit einer wesentlich größeren Bandbreite bezüglich der Nachweisempfindlichkeit analysiert werden, um auf diese Weise die erfindungsgemäße Funktionsüberprüfung des Laserscanners signifikant zu verbessern.

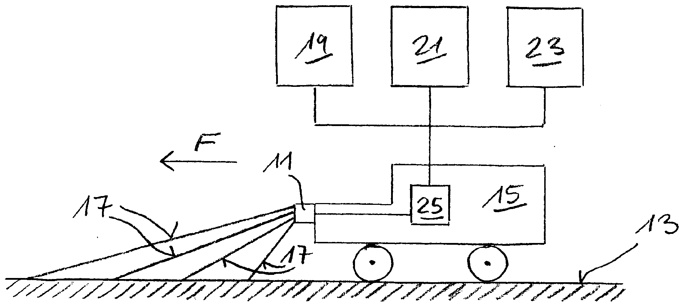

Weitere bevorzugte Ausführungsformen sind auch in den abhängigen Ansprüchen, der Beschreibung sowie der Zeichnung angegeben.

Die Erfindung wird im Folgenden beispielhaft unter Bezugnahme auf die Zeichnung beschrieben, deren einzige Figur schematisch einen an einem Fahrzeug angebrachten Laserscanner zeigt, mit welchem die Umgebung nach dem erfindungsgemäßen Verfahren erfasst werden kann.

Gemäß dem in der Figur dargestellten Ausführungsbeispiel ist ein Laserscanner 11 an einem Fahrzeug 15 angebracht, das sich in einer Fahrtrichtung F auf dem Boden 13 bewegt. Der Laserscanner 11 ist derart ausgebildet, dass eine Abtastung des Bodens mit vier Abtastebenen 17 erfolgt, die geneigt zueinander verlaufen und somit den Boden 13 in unterschiedlichen Entfernungen zum Fahrzeug 15 abtasten.

Wie im Einleitungsteil erwähnt, kann vorgesehen sein, dass jeweils einem Sender zwei Empfänger zugeordnet sind, um auf diese Weise die vorstehend erläuterten Kombinationsmöglichkeiten bei einer Funktionsüberprüfung des Laserscanners 11 nutzen zu können.

Dem Laserscanner 11 ist eine Steuereinrichtung 25 zugeordnet, die in den Laserscanner 11 selbst integriert oder ein Bestandteil des Fahrzeugs 15 sein kann.

Wie durch Funktionsblöcke in der Figur angedeutet, ist die Steuereinrichtung 25 dazu in der Lage, auf der Basis der von den Empfängern des Laserscanners 11 nachgewiesenen Signale gleichzeitig verschiedene Applikationen durchzuführen.

So wird zum einen eine so genannte Nutz- oder Arbeitsapplikation 19 durchgeführt, die beispielsweise darin besteht, eine Spurführung für das Fahrzeug 15 zu realisieren, d.h. durch Erkennen von Fahrbahnmarkierungen oder Fahrbahnbegrenzungen mittels des Laserscanners 11 das Fahrzeug 15 auf der den Boden 13 bildenden Straße zu führen.

Zusätzlich wird mittels der Steuereinrichtung 25 des Laserscanners 11 gleichzeitig eine Funktionsüberprüfung 21 des Laserscanners durchgeführt. In diesem Ausführungsbeispiel nutzt die Funktionsüberprüfung die Messergebnisse aller vier Abtastebenen 17, wie es im Einleitungsteil bereits ausführlich erläutert wurde. Dies ist jedoch nicht zwingend. Für die Funktionsüberprüfung 21 können beispielsweise auch nur zwei der vier auf den Boden gerichteten Abtastebenen genutzt werden, während die beiden anderen Ebenen für die eigentliche Arbeitsapplikation zur Verfügung stehen. Dies ist wiederum lediglich eine beispielhafte Ausgestaltung der Erfindung. Darüber hinaus können zusätzlich zu den vier dargestellten Abtastebenen 17 weitere Abtastebenen vorhanden sein, in denen der Laserscanner 11 die Umgebung abtastet.

Einige oder alle vier auf den Boden gerichteten Abtastebenen 17 oder zusätzlich vorgesehene Abtastebenen (nicht dargestellt) werden in dem dargestellten Ausführungsbeispiel darüber hinaus für eine Sicherheitsapplikation 23 genutzt. Bei dieser Sicherheitsapplikation 23 kann es sich beispielsweise um eine Kollisionswarnung oder eine ein Kolonnenfahren unterstützende Abstandsregelung handeln, für die es erforderlich ist, mit hoher Zuverlässigkeit die Entfernung zu vorausfahrenden Fahrzeugen (nicht dargestellt) zu bestimmen.

Die dargestellte Ausführungsform basiert also auf dem erfindungsgemäßen Prinzip, gleichzeitig mit einer Arbeitsapplikation 19 eine Funktionsüberprüfung 21 des Laserscanners 21 durchzuführen und hierzu den Boden 13 als Referenz zu nutzen, indem die Bodensignale aus mehreren - in diesem Beispiel vier - Abtastebenen 17 ausgewertet und daraufhin überprüft werden, ob diese Bodensignale eine Bedingung erfüllen, die für einen ungestörten Zustand erwartet wird, wobei diese Prüfung eine Vielzahl von Szenarien berücksichtigen kann, wie es im Einleitungsteil ausführlich dargelegt wurde.

### Bezugszeichenliste

- 11: Laserscanner
- 13: Boden
- 15: Träger, Fahrzeug
- 17: Abtastebene
- 19: Arbeitsapplikation
- 21: Funktionsüberprüfung
- 23: Sicherheitsapplikation
- 25: Steuereinrichtung

- F: Fahrtrichtung

## Patentansprüche

1. Verfahren zum ortsaufgelösten Erfassen der Umgebung mittels eines Laserscanners (11),
der an einem sich relativ zu seiner Umgebung am Boden (13) bewegenden Träger (15), insbesondere an einem Fahrzeug, angebracht ist und dabei die Umgebung in wenigstens zwei geneigt zueinander verlaufenden Abtastebenen (17) abtastet sowie eine vorgegebene Arbeitsapplikation (19) durchführt,
wobei der Laserscanner (11) derart an dem Träger (15) angebracht ist, dass wenigstens zwei geneigt zueinander verlaufende Abtastebenen (17) des Laserscanners (11) auf den Boden (13) gerichtet sind und die Abtastebenen (17) jeweils ein als solches erkennbares Bodensignal erzeugen, und
wobei von dem Laserscanner (11) gleichzeitig mit der Arbeitsapplikation (19) eine zusätzliche Funktionsüberprüfung (21) des Laserscanners (11) durchgeführt wird, bei welcher der Boden (13) als Referenz verwendet wird,
indem wiederholt geprüft wird, ob die von den geneigt zueinander verlaufenden Abtastebenen (17) erzeugten Bodensignale eine für einen ungestörten Zustand des Laserscanners (11) erwartete Bedingung erfüllen, und eine Maßnahme, insbesondere eine Sicherheitsmaßnahme, eingeleitet wird, wenn dies nicht der Fall ist.

2. Verfahren nach Anspruch 1,
**dadurch gekennzeichnet,**
**dass** gleichzeitig mit der Arbeitsapplikation (19) und der Funktionsüberprüfung (21) eine zusätzliche Sicherheitsapplikation (23) mittels des Laserscanners (11) durchgeführt wird, insbesondere eine Applikation zur Kollisionswarnung.

3. Verfahren nach Anspruch 1 oder 2,
**dadurch gekennzeichnet,**
**dass** bei der Funktionsüberprüfung (21) das zeitliche Verhalten der von den geneigt zueinander verlaufenden, auf den Boden (13) gerichteten Abtastebenen (17) erzeugten Bodensignale berücksichtigt wird.

4. Verfahren nach einem der vorhergehenden Ansprüche,
**dadurch gekennzeichnet,**
**dass** bei der Funktionsüberprüfung (21) die Zuordnung der geneigt zueinander verlaufenden, auf den Boden (13) gerichteten Abtastebenen (17) zu wenigstens einer Sendeeinrichtung und zumindest einer Empfangseinrichtung des Laserscanners (11) berücksichtigt wird.

5. Verfahren nach einem der vorhergehenden Ansprüche,
**dadurch gekennzeichnet,**
**dass** wenigstens zwei geneigt zueinander verlaufenden, auf den Boden (13) gerichteten Abtastebenen (17) eine gemeinsame Sendeeinrichtung und jeweils eine eigene Empfangseinrichtung des Laserscanners (11) zugeordnet sind, wobei von der Sendeeinrichtung ausgesandte und aus der Umgebung zurückgeworfene Abtaststrahlung von den Empfangseinrichtungen in der jeweils zugeordneten Abtastebene (17) nachgewiesen wird.

6. Verfahren nach einem der vorhergehenden Ansprüche,
**dadurch gekennzeichnet,**
**dass** der Laserscanner (11) mit vier geneigt zueinander verlaufenden, auf den Boden (13) gerichteten Abtastebenen (17) arbeitet, denen paarweise eine gemeinsame Sendeeinrichtung und jeweils eine eigene Empfangseinrichtung zugeordnet sind.

7. Verfahren nach einem der vorhergehenden Ansprüche,
**dadurch gekennzeichnet,**
**dass** in den geneigt zueinander verlaufenden, auf den Boden (13) gerichteten Abtastebenen (17) die Nachweisempfindlichkeit unterschiedlich eingestellt wird, wobei vorzugsweise die Nachweisempfindlichkeiten jeweils zeitlich veränderbar sind.

## Claims

1. A method for the spatially resolved detection of the environment by means of a laser scanner (11)
which is attached to a carrier (15), in particular to a vehicle, moving relative to its environment on the ground (13); which in so doing scans the environment in at least two scanning planes (17) which extend inclined with respect to one another; and which also carries out a predefined work application (19),
wherein the laser scanner (11) is attached to the carrier (15) such that at least two scanning planes (17) of the laser scanner (11) which extend inclined with respect to one another are directed toward the ground (13) and the scanning planes (17) each generate a ground signal recognizable as such; and
wherein an additional function check (21) of the laser scanner (11), in which the ground (13) is used as a reference, is carried out by the laser scanner (11) simultaneously with the work application (19) in that a repeat check is made whether the ground signals generated by the scanning planes (17) which extend inclined with respect to one another satisfy a condition expected for an undisturbed state of the laser scanner (11) and in that a measure, in particular a safety measure, is initiated if this is not the case.

2. A method in accordance with claim 1,
**characterized in that**
an additional safety application (23), in particular a collision warning application, is carried out by means of the laser scanner (11) simultaneously with the work application (19) and the function check (21).

3. A method in accordance with claim 1 or claim 2,
**characterized in that**
the time behavior of the ground signals generated by the scanning planes (17) which extend inclined with respect to one another and which are directed toward the ground (13) is taken into account in the function check (21).

4. A method in accordance with any one of the preceding claims,
**characterized in that**
the association of the scanning planes (17), which extend inclined with respect to one another and which are directed toward the ground (13), with at least one transmission device and with at least one reception device of the laser scanner (11) is taken into account in the function check (21).

5. A method in accordance with any one of the preceding claims,
**characterized in that**
a common transmission device and a respective separate reception device of the laser scanner (11) are associated with at least two scanning planes (17) which extend inclined with respect to one another and which are directed toward the ground (13), with scanning radiation which is transmitted by the transmission device and is reflected back from the environment being detected by the reception devices in the respective associated scanning plane (17).

6. A method in accordance with any one of the preceding claims,
**characterized in that**
the laser scanner (11) works with four scanning planes (17) which extend inclined with respect to one another, which are directed toward the ground (13), and with which a common transmission device and a respective separate reception device are associated in pairs.

7. A method in accordance with any one of the preceding claims,
**characterized in that**
the detection sensitivity is set differently in the scanning planes (17) which extend inclined with respect to one another and which are directed toward the ground (13), with the detection sensitivities preferably each being variable in time.

## Revendications

1. Procédé pour déterminer avec résolution locale l'environnement au moyen d'un scanneur laser (11), qui est monté sur un support (15) mobile au sol (13) par rapport à son environnement, en particulier sur un véhicule, et qui palpe l'environnement dans au moins deux plans de palpage (17) s'étendant en inclinaison l'un par rapport à l'autre, et exécute une application de travail (19) prédéterminée,
dans lequel le scanneur laser (11) est monté sur le support (15) de telle sorte qu'au moins deux plans de palpage (17) du scanneur laser (11) s'étendant en inclinaison l'un par rapport à l'autre sont dirigés vers le sol (13) et que les plans de palpage (17) génèrent chacun un signal de sol identifiable en tant que tel, et
dans lequel le scanneur laser (11) exécute, simultanément avec l'application de travail (19), un contrôle supplémentaire du fonctionnement du scanneur laser (11), dans lequel le sol (13) sert de référence,
dans lequel on vérifie à répétition si les signaux de sol générés par les plans de palpage (17) s'étendant en inclinaison l'un par rapport à l'autre satisfont une condition attendue pour un état non perturbé du scanneur laser (11), et on amorce une mesure, en particulier une mesure de sécurité, si cela n'est pas le cas.

2. Procédé selon la revendication 1,
**caractérisé en ce que**
simultanément avec l'application de travail (19) et le contrôle de fonctionnement (21), on exécute une application de sécurité supplémentaire (23) au moyen du scanneur laser (11), en particulier une application d'avertissement de collision.

3. Procédé selon la revendication 1 ou 2,
**caractérisé en ce que**
lors du contrôle de fonctionnement (21), on prend en compte le comportement temporel des signaux de sol générés par les plans de palpage (17) s'étendant en inclinaison l'un par rapport à l'autre et dirigés vers le sol (13).

4. Procédé selon l'une des revendications précédentes,
**caractérisé en ce que**
lors du contrôle de fonctionnement (21), on prend en compte l'association des plans de palpage (17) s'étendant en inclinaison l'un par rapport à l'autre et dirigés vers le sol (13) à au moins un dispositif émetteur et à au moins un dispositif récepteur du scanneur laser (11).

5. Procédé selon l'une des revendications précédentes,
**caractérisé en ce que**
on associe à au moins deux plans de palpage (17), s'étendant en inclinaison l'un par rapport à l'autre et dirigés vers le sol (13), un dispositif émetteur commun et respectivement un dispositif récepteur propre du scanneur laser (11), le rayonnement de palpage émis par le dispositif émetteur et réfléchi par l'environnement étant décelé par les dispositifs récepteurs dans le plan de palpage (17) respectif associé.

6. Procédé selon l'une des revendications précédentes,
**caractérisé en ce que**
le scanneur laser (11) opère avec quatre plans de palpage (17) s'étendant en inclinaison les uns par rapport aux autres et dirigés vers le sol (13), auxquels sont associés par paire un dispositif émetteur commun et respectivement un dispositif récepteur propre.

7. Procédé selon l'une des revendications précédentes,
**caractérisé en ce que**
dans les plans de palpage (17) s'étendant en inclinaison l'un par rapport à l'autre et dirigés vers le sol (13), on règle différentes sensibilités de décèlement, les sensibilités de décèlement étant de préférence chacune variables dans le temps.
